# EUROPEAN PATENT SPECIFICATION

(11) **EP 3 687 040 B1**
(45) Date of publication and mention of the grant of the patent: **08.12.2021**
(21) Application number: 17926094.8
(22) Date of filing: 21.09.2017
(51) Int. Cl.: H02K 3/34, H02K 1/18, H02K 3/46, H02K 3/38, H02K 1/14, H02K 3/32, H02K 15/10, H02K 15/095

(54) **STATOR, ELECTRIC MOTOR, AND VENT FAN**
STATOR, ELEKTROMOTOR UND LÜFTUNGSGEBLÄSE
STATOR, MOTEUR ÉLECTRIQUE ET VENTILATEUR D'AÉRATION

(43) Date of publication of application: 29.07.2020
(73) Proprietor: Mitsubishi Electric Corporation, Chiyoda-ku Tokyo 100-8310 (JP)
(72) Inventor: KATO, Masahiro, Tokyo 100-8310 (JP); OZAKI, Junichi, Tokyo 100-8310 (JP); YAJIMA, Katsutoshi, Tokyo 100-8310 (JP); TOKUMARU, Hiroyuki, Tokyo 100-8310 (JP)
(74) Representative: Witte, Weller & Partner Patentanwälte mbB
(86) International application number: PCT/JP2017/034130
(87) International publication number: WO 2019/058486

(56) References cited:
- WO-A1-2013/157101
- WO-A1-2016/136384
- DE-U1-202008 016 729
- JP-A- H 066 959
- JP-A- 2001 112 205
- JP-A- 2001 136 700
- JP-A- 2001 136 700
- JP-A- 2007 236 026
- JP-A- 2009 254 060
- US-A- 5 187 858

## Description

### Field

The present invention relates to a stator, an electric motor, and a ventilation fan that include a winding frame that covers an inner core.

### Background

A so-called concentrated winding motor including a stator core including an outer core and a plurality of tooth portions, which are inner cores, surrounded by the outer core is known, in which windings are concentratedly wound around the tooth portions. The concentrated winding motor is provided with a winding frame for insulation between the stator core and the winding in some cases. In the case of a concentrated winding motor including the winding frame, the winding is wound around the winding frame that covers the tooth portions. JP 5 627 819 B2 discloses a technology of a single-phase alternating current concentrated winding motor provided with a winding frame.

Document DE 20 2008 016729 U1 relates to a stator for an electric motor designed as an internal rotor, consisting of a stator core made of individual layered sheet metal blanks, with an inner receiving opening for a rotor in an inner stator core with pole teeth projecting radially outward from the circumferential wall of the receiving opening and made from pole tooth webs and end-side pole teeth. Fitting pieces, the stator inner core having an insulating body which surrounds the pole teeth in such a way that it forms an electrically insulating coil carrier for motor windings wound around the pole tooth webs, as well as a return ring comprising the stator inner core, which has a number of joining grooves corresponding to the number of pole teeth which the pole teeth are connected to the return ring via their pole-tooth fitting pieces, as well as further grooves formed between the joining grooves, the motor windings being connected to electrical connection conductors via electrical connection contacts are connectable.

Document US 5 187 858 A, according to its abstract, states that a stator for a rotary machine is produced by a method which includes the steps of: mounting terminal pins to one end of a main core unit which has teeth protruding from its outside; winding the beginning part of a coil wire around one of the terminal pins, and then winding the coil wire around a plurality of adjoining teeth to form a coil and repeating the formation of a coil until a predetermined number of coils are obtained on the outside of the main core unit, and thereafter winding the ending part of the coil wire around one of the other terminal pins; fitting a ring unit on the outside of the main core unit while these units are respectively kept in appropriate shapes by adjusting members; and inserting wedge members between the outside of the coils and protrusions formed on the outer ends of the teeth.

Document JP 2001 136700 A, according to its abstract, states that, to improve the space factor of coil winding in a slot and an assembly machining property by precisely insulating a core from the coil winding with less number of parts as much as possible, the stator is equipped with an interlock core where a plurality of magnetic pole pieces having back yoke and teeth and are interlocked via a joint while the magnetic pole pieces can be bent, an insulator that has a teeth periphery wall for covering a teeth wall surface and a back yoke projection part, and a comb-teeth-shaped back yoke insulation sheet where a teeth reception channel for inserting the plurality of teeth is formed and a plurality of back yoke wall surfaces are covered. In this case, the back yoke insulation sheet is engaged to a channel being formed between the back yoke projection and the magnetic pole piece for fixing.

Document WO 2016 136384 A1, according to its abstract, states that an armature is provided with: a back yoke portion formed in a ring shape; a plurality of teeth portion disposed in a ring shape on the inner surface of the back yoke portion, forming a plurality of slots opened on the outer circumferential side at intervals in the circumferential direction, and fitted on the inner circumferential surface of the back yoke portion; coils housed in the slots; and wedges placed between the coils and the back yoke portion in the opening portions of the slots.

### Summary

### Technical Problem

A clearance for insulation is ensured between the winding, which is a charging part, and the stator core, which is a non-charging part, in the electric motor. The winding frame is used for insulation between the inner core and the winding, while a wedge, which is an insulator, is sometimes used for insulation between the outer core and the winding.

If a displacement occurs in the position of the wedge between the winding wound around the winding frame and the outer core, insulation failure may occur between the winding and the stator core. When the wedge is inserted between the winding and the outer core while the wedge is kept in contact with the outer core to reduce the displacement of the position of the wedge, there is a case where the insertion of the wedge is disturbed by the frictional force between the wedge and the outer core. Since it is difficult to insert the wedge, the position of the wedge is likely to be displaced. Furthermore, when the clearance between the outer core and the winding is expanded to facilitate the insertion of the wedge, it becomes difficult to ensure stable insulation between the winding and the stator core.

The present invention has been made in view of the above circumstances, and it is an object of the present invention to obtain a stator that can reduce the displacement of the position of the insulator and ensure stable insulation between the stator core and the winding.

### Solution to Problem

In order to solve the above-described problems and achieve the object, a stator, an electric motor, and ventilation fan are provided according to the claims.

### Advantageous Effects of Invention

The stator according to the present invention has an effect of being able to reduce the displacement of the position of the insulator, and ensure stable insulation between the stator core and the winding.

### Brief Description of Drawings

FIG. 1 is a schematic longitudinal sectional view of an electric motor including a stator according to a first embodiment of the present invention.
FIG. 2 is a plan view of a stator core illustrated in FIG. 1.
FIG. 3 is a perspective view of the stator illustrated in FIG. 1.
FIG. 4 is a view of a tooth portion and a winding frame illustrated in FIG. 1 viewed from a direction of the outer core which is not illustrated.
FIG. 5 is a view for explaining the insertion of a wedge in the winding frame illustrated in FIG. 1 viewed from a direction of the outer core which is not illustrated.
FIG. 6 is a view illustrating: the tooth portions before the wedges illustrated in FIG. 5 are inserted; and the winding frames attached to the tooth portions viewed from a direction of the outer core which is not illustrated.
FIG. 7 is a view illustrating a state after the wedges are inserted into the winding frames illustrated in FIG. 6 viewed from a direction of the outer core which is not illustrated.
FIG. 8 is a sectional view of a ventilation fan according to a second embodiment of the present invention.

### Description of Embodiments

Hereinafter, a stator, an electric motor, and a ventilation fan according to embodiments of the present invention will be described in detail with reference to the drawings. Note that this invention is not limited by these embodiments.

### First Embodiment.

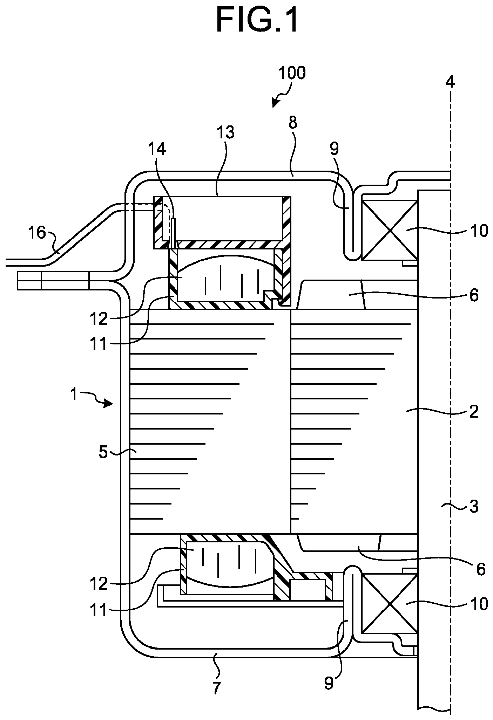

FIG. 1 is a schematic longitudinal sectional view of an electric motor 100 including a stator 1 according to a first embodiment of the present invention. In the first embodiment, the electric motor 100 is a three-phase alternating current concentrated winding motor. In FIG. 1, the cross sections of a part of components of the electric motor 100 are hatched, and hatching on the cross sections of the other components are omitted.

The electric motor 100 includes a stator 1, a rotor 2 surrounded by the stator 1, and a rotating shaft 3 coupled to the rotor 2. The stator 1 generates a force for rotating the rotor 2. The rotor 2 rotates inside the stator 1. The rotor 2 is formed by laminating electromagnetic steel plates. The rotating shaft 3 is disposed on a central axis 4, which is the rotation center of the rotor 2. Note that FIG. 1 illustrates a portion of the electric motor 100 on one side in a radial direction from the central axis 4, and the other portions are omitted.

The stator 1 includes a stator core 5 and a winding frame 11 around which a winding 12 is wound. The stator core 5 is formed by laminating electromagnetic steel plates. The winding frame 11 is formed of an insulating material. The winding 12 wound around the winding frame 11 constitutes a coil.

A frame 7 and a bracket 8 constitute an outer shell of the electric motor 100. The stator 1 is press-fitted into the frame 7. The rotating shaft 3 extends through the frame 7 from the inside to the outside of the electric motor 100, and transmits a rotational force of the rotor 2 to the outside of the electric motor 100.

The electric motor 100 includes two bearings 10 that rotatably support the rotating shaft 3. One bearing 10 is disposed inside a bearing housing 9 formed in the frame 7. The other bearing 10 is disposed inside a bearing housing 9 formed in the bracket 8.

A secondary conductor 6 is inserted into a slot provided in the rotor 2. The secondary conductor 6 is formed by die casting of an aluminum material. Note that, in FIG. 1, the illustration of the slot of the rotor 2 is omitted.

A terminal block 13 is fixed to the winding frame 11. The terminal block 13 is formed of a resin that is an insulating material. The terminal block 13 houses mounted components such as a terminal plate or a thermal fuse. The terminal plate is used for wire connection of each phase.
The thermal fuse disconnects a line when detecting an excessive temperature rise in the coil. The terminal block 13 may house a mounted component other than the terminal plate and the thermal fuse. Note that, in FIG. 1, the illustration of the mounted components is omitted.

A conductive pin 14 is attached to the winding frame 11, and an end portion of the coil of the winding 12 is wound around the conductive pin 14. The conductive pin 14 is inserted into the inside of the terminal block 13. The winding 12 is connected to the mounted components in the terminal block 13 via the conductive pin 14. A lead wire 16 connects an external power supply that supplies power to the electric motor 100, and the conductive pin 14.

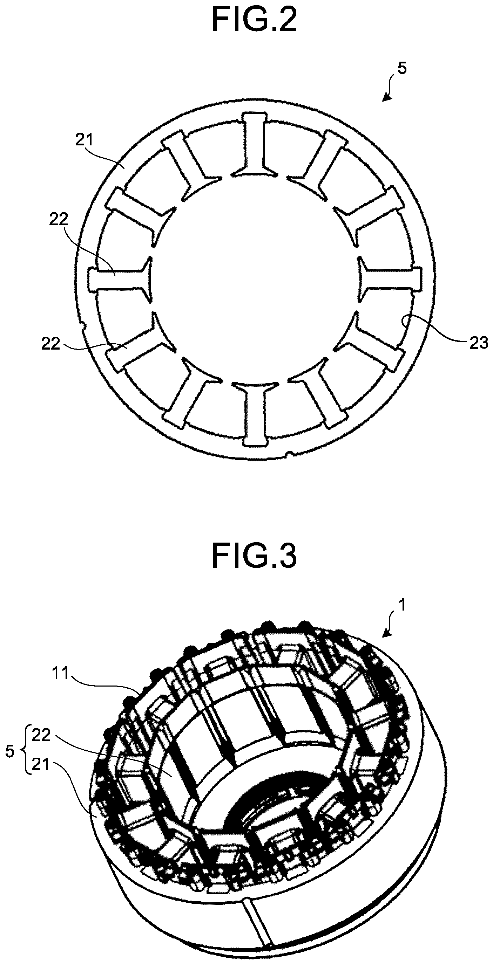

FIG. 2 is a plan view of the stator core 5 illustrated in FIG. 1. FIG. 3 is a perspective view of the stator 1 illustrated in FIG. 1. FIG. 3 illustrates the stator 1 in a state in which the winding 12 is not wound.

The stator core 5 includes: an annular yoke 21, which is an outer core; and a plurality of tooth portions 22, which are inner cores surrounded by the outer core. A slot 23 of the stator core 5 is constituted by adjacent tooth portions 22 and the yoke 21. In the first embodiment, the stator core 5 includes twelve tooth portions 22 and twelve slots 23.

The winding frame 11 illustrated in FIG. 1 is provided in each tooth portion 22. The winding frame 11 covers the tooth portion 22. The stator 1 includes twelve winding frames 11. The winding 12 is concentratedly wound around every one or plurality of tooth portions 22. Since the electric motor 100 includes a concentrated winding coil, the size of the coil in the direction of the central axis 4 can be decreased as compared with the case of distributed winding in which the winding 12 is distributedly wound around the plurality of tooth portions 22. The electric motor 100, which is a concentrated winding motor, can decrease the size of the outer shape.

The stator core 5 can be divided into the yoke 21, which is an outer core, and the plurality of tooth portions 22, which are inner cores. Each tooth portion 22 is joined to an inner side surface of the yoke 21. Since the winding 12 can be wound around the tooth portion 22 which is removed from the yoke 21, thus the winding 12 can be wound around the tooth portion 22 with high density. Accordingly, a coil in which the winding 12 is wound with high density can be mounted on the electric motor 100.

A clearance for insulation is ensured between the winding 12, which is a charging part, and the stator core 5, which is a non-charging part, in the electric motor 100. The winding frame 11 is used for insulation between the tooth portion 22 and the winding 12. A wedge to be subsequently described is used for insulation between the yoke 21 and the winding 12.

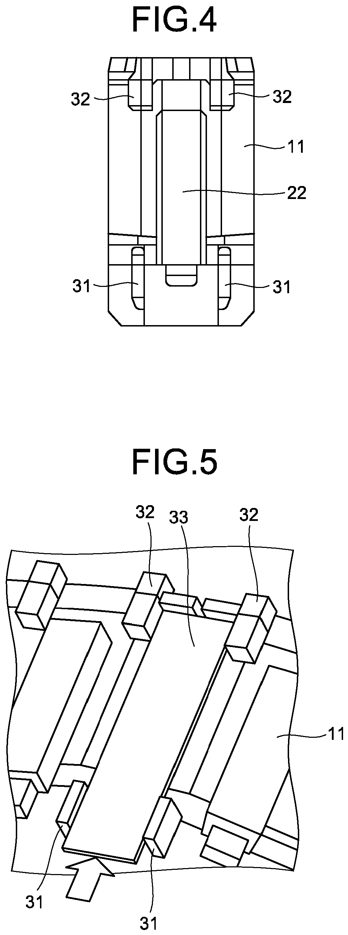

FIG. 4 is a view of the tooth portion 22 and the winding frame 11 illustrated in FIG. 1 viewed from a direction of the yoke 21 which is not illustrated. FIG. 5 is a view for explaining the insertion of a wedge 33 in the winding frame 11 illustrated in FIG. 1 viewed from a direction of the yoke 21 which is not illustrated. FIGS. 4 and 5 illustrate a plane of the tooth portion 22 joined to the yoke 21 which is not illustrated. The stator 1 illustrated in FIG. 1 includes the wedge 33, which is an insulator, inserted between the winding 12 and the yoke 21. The wedge 33 is a plate member formed of an insulating material. Bending may be added to the wedge 33.

The winding frame 11 is provided with a guide portion 31 that guides the insertion of the wedge 33 between the winding 12 and the yoke 21, and an abutment portion 32 that abuts on the inserted wedge 33. The guide portion 31 and the abutment portion 32 each are a projecting portion that protrudes from a surface of the winding frame 11, and are a rectangular parallelepiped or a polyhedron. The guide portion 31 and the abutment portion 32 are provided on the winding frame 11 protruding toward the yoke 21. The height of the guide portion 31 and the height of the abutment portion 32 from the surface of the winding frame 11 are set higher than the thickness of the wedge 33. The height of the guide portion 31 and the height of the abutment portion 32 from the surface of the winding frame 11 may be set lower than the thickness of the wedge 33.

As illustrated in FIG. 5, the wedge 33 is inserted by being slid between a pair of the guide portions 31. The pair of guide portions 31 are disposed at intervals corresponding to the width of the wedge 33. Facing surfaces of the two guide portions 31 are parallel to each other. By placing the wedge 33 along the guide portions 31, the wedge 33 can be easily inserted between the winding 12 and the yoke 21. Since a situation in which the insertion of the wedge 33 is disturbed by the frictional force with the yoke 21 can be avoided, the wedge 33 can be inserted smoothly. Furthermore, since the wedge 33 is disposed between a pair of the guide portions 31, lateral displacement of the wedge 33 can be reduced.

A tip of the inserted wedge 33 abuts the abutment portion 32. Since the wedge 33 is held against the abutment portions 32, lateral displacement of the wedge 33 can be reduced. Since the displacement of the position of the wedge 33 can be reduced, insulation failure between the winding 12 and the yoke 21 can be reduced. In addition, since positional displacement of the wedge 33 can be reduced, the width of the wedge 33 can be narrowed. Since the wedge 33 can be downsized, the material cost of the wedge 33 can be reduced.

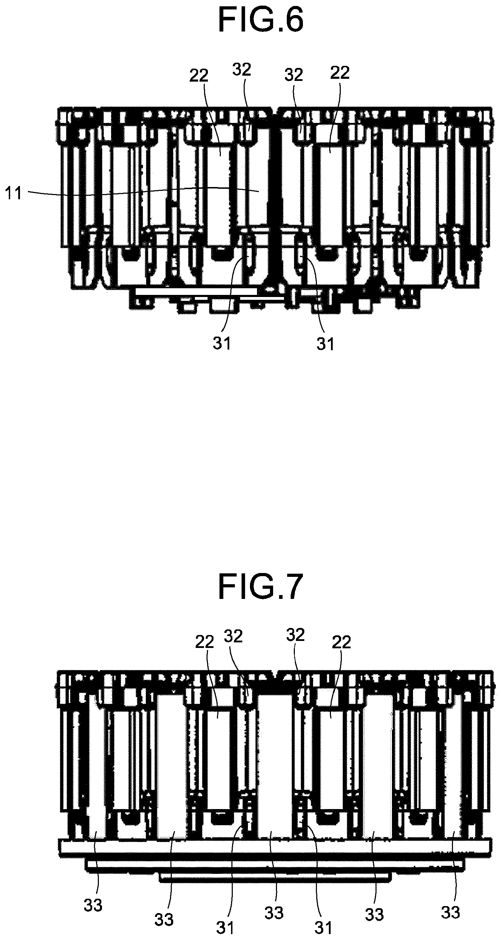

FIG. 6 is a view illustrating the tooth portions 22 before the wedges 33 illustrated in FIG. 5 are inserted and the winding frames 11 attached to the tooth portions 22. FIG. 7 is a view illustrating a state after the wedges 33 are inserted into the winding frames 11 illustrated in FIG. 6. FIGS. 6 and 7 illustrate a state in which the winding 12 is not wound. The wedge 33 is inserted between the tooth portions 22. The wedge 33 is disposed between the yoke 21 and the winding 12 in the slot 23 illustrated in FIG. 2.

According to the first embodiment, in the stator 1, since the wedge 33 can be inserted along the guide portions 31, the wedge 33 can be easily inserted. In the stator 1, the wedge 33 can be easily inserted and thus the displacement of the position of the wedge 33 can be reduced. Consequently, the stator 1 has an effect of being able to reduce the displacement of the position of the wedge 33, and ensure stable insulation between the stator core 5 and the winding 12. The electric motor 100 can reduce defects due to insulation failure in the stator 1.

### Second Embodiment.

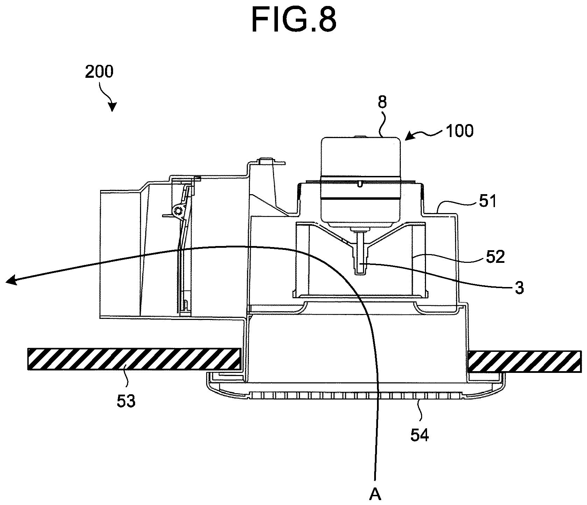

FIG. 8 is a sectional view of a ventilation fan 200 according to a second embodiment of the present invention. The ventilation fan 200 is installed on a ceiling 53 in a room and is connected to a duct laid out to communicate the ceiling cavity with the outside of the room. The ventilation fan 200 causes the air sucked from the room to flow into the duct. In FIG. 8, the illustration of the duct is omitted. Hatching is omitted in a part of the cross section illustrated in FIG. 8.

The ventilation fan 200 includes the electric motor 100 of the first embodiment, and a fan 52 that rotates in conjunction with the rotation of the rotor 2 illustrated in FIG. 1 and generates an air flow. The ventilation fan 200 also includes a fan casing 51 in which the fan 52 is housed, and a design grill 54 that covers a suction port on the indoor side. The fan 52 is attached to the rotating shaft 3 of the electric motor 100. The ventilation fan 200 causes the electric motor 100 to rotate the fan 52, thereby generating an air flow moving as indicated by an arrow A.

According to the second embodiment, the ventilation fan 200 includes the electric motor 100 of the first embodiment, such that stable insulation between the stator core 5 and the winding 12 can be ensured, and defects due to insulation failure can be reduced in the stator 1.

### Reference Signs List

1 stator; 2 rotor; 3 rotating shaft; 4 central axis; 5 stator core; 6 secondary conductor; 7 frame; 8 bracket; 9 bearing housing; 10 bearing; 11 winding frame; 12 winding; 13 terminal block; 14 conductive pin; 16 lead wire; 21 yoke; 22 tooth portion; 23 slot; 31 guide portion; 32 abutment portion; 33 wedge; 51 fan casing; 52 fan; 53 ceiling; 54 design grill; 100 electric motor; 200 ventilation fan.

## Claims

1. A stator (1) for an electric motor (100), comprising:
a stator core (5) including an annular yoke(21) and a plurality of tooth portions(22) surrounded by the yoke (21), the stator core (5) comprising slots (23) constituted by adjacent tooth portions (22) and the annular yoke (21);
a plurality of winding frames (11) each covering a respective tooth portion (22), and each winding frame (11) being formed of an insulating material;
a plurality of windings (12) each being concentratedly wound around a respective winding frame (11); and
a plurality of wedges (33) each being disposed between the winding (12) and the yoke (21) in a respective slot (23), and each wedge (33) being a plate member formed of an insulating material, **characterized in that**
each winding frame (11) is provided with a guide portion (31) to guide insertion of the wedge (33) between the winding (12) and the yoke (21), and
each guide portion (31) protrudes from the respective winding frame (11) toward the yoke (21),
each wedge (33) is inserted between a pair of the guide portions (31) located at an interval corresponding to a width of the wedge (33).

2. The stator (1) according to claim 1, wherein each winding frame (11) is provided with an abutment portion (32) to abut the inserted wedge (33).

3. An electric motor comprising:
a stator (1) according to claim 1 or 2; and
a rotor (2) surrounded by the stator (1).

4. A ventilation fan (200) comprising:
an electric motor according to claim 3; and
a fan (52) to rotate in conjunction with rotation of the rotor (2) and generates an air flow.

## Patentansprüche

1. Stator (1) für einen Elektromotor (100), der aufweist:
einen Statorkern (5), der ein ringförmiges Joch (21) und eine Vielzahl von Zahnabschnitten (22) umfasst, die von dem Joch (21) umgeben sind, wobei der Statorkern (5) Schlitze (23) aufweist, die durch benachbarte Zahnabschnitte (22) und das ringförmige Joch (21) gebildet werden;
eine Vielzahl von Wicklungsrahmen (11), wobei jeder einen entsprechenden Zahnabschnitt (22) bedeckt und wobei jeder Wicklungsrahmen (11) aus einem Isoliermaterial gebildet ist;
eine Vielzahl von Wicklungen (12), wobei jede konzentriert um einen jeweiligen Wicklungsrahmen (11) gewickelt ist; und
eine Vielzahl von Keilen (33), wobei jeder zwischen der Wicklung (12) und dem Joch (21) in einem jeweiligen Schlitz (23) angeordnet ist, und wobei jeder Keil (33) ein Plattenglied ist, das aus einem Isoliermaterial gebildet ist, **dadurch gekennzeichnet, dass**
jeder Wicklungsrahmen (11) mit einem Führungsabschnitt (31) zum Führen eines Einführens des Keils (33) zwischen die Wicklung (12) und das Joch (21) vorgesehen ist, und
jeder Führungsabschnitt (33) aus dem jeweiligen Wicklungsrahmen (11) in Richtung des Jochs (21) vorsteht,
jeder Keil (33) zwischen ein Paar der Führungsabschnitte (31) eingeführt wird, die sich in einem Zwischenraum befinden, der einer Breite des Keils (33) entspricht.

2. Stator (1) nach Anspruch 1, wobei jeder Wicklungsrahmen (11) mit einem Anschlagsabschnitt (32) zum Anstoßen des eingeführten Keils (33) vorgesehen ist.

3. Elektromotor, der aufweist:
einen Stator (1) nach Anspruch 1 oder 2; und
einen Rotor (2), der von dem Stator (1) umgeben wird.

4. Ventilationsgebläse (200), das aufweist:
einen Elektromotor nach Anspruch 3; und
ein Gebläse (52) zum gemeinsamen Drehen mit einer Drehung des Rotors (2) und zum Erzeugen einer Luftströmung.

## Revendications

1. Stator (1) pour un moteur électrique (100), comprenant :
un noyau de stator (5) comprenant une culasse annulaire (21) et une pluralité de parties dentées (22) entourées par la culasse (21), le noyau de stator (5) comprenant des fentes (23) constituées par des parties dentées adjacentes (22) et la culasse annulaire (21) ;
une pluralité de structures d'enroulement (11) couvrant chacune une partie dentée respective (22), et chaque structure d'enroulement (11) étant formée en un matériau isolant ;
une pluralité d'enroulements (12), chacun étant enroulé de façon concentrée autour d'une structure d'enroulement respective (11) ; et
une pluralité de cales (33), chacune étant disposée entre l'enroulement (12) et la culasse (21) dans une fente respective (23), et chaque cale (33) étant un élément plaque formé d'un matériau isolant, **caractérisé en ce que**
chaque structure d'enroulement (11) est munie d'une partie de guidage (31) pour guider l'insertion de la cale (33) entre l'enroulement (12) et la culasse (21), et
chaque partie de guidage (31) fait saillie depuis la structure d'enroulement respective (11) en direction de la culasse (21),
chaque cale (33) est insérée entre une paire des parties de guidage (31) située à un intervalle correspondant à une largeur de la cale (33).

2. Stator (1) selon la revendication 1, dans lequel chaque structure d'enroulement (11) est munie d'une partie de butée (32) qui vient en butée contre la cale insérée (33).

3. Moteur électrique comprenant :
un stator (1) selon la revendication 1 ou 2 ; et
un rotor (2) entouré par le stator (1).

4. Ventilateur d'aération (200) comprenant :
un moteur électrique selon la revendication 3 ; et
un ventilateur (52) tournant en conjonction avec la rotation du rotor (2) et générant un flux d'air.
